# EUROPEAN PATENT SPECIFICATION

(11) **EP 2 973 600 B1**
(45) Date of publication and mention of the grant of the patent: **09.05.2018**
(21) Application number: 14814608.7
(22) Date of filing: 17.03.2014
(51) Int. Cl.: G21C 5/10, G21C 11/06, G21C 15/02, G21C 13/02, G21C 1/32

(54) **SUPPORTING NUCLEAR FUEL ASSEMBLIES**
STÜTZUNG VON KERNBRENNSTABBÜNDELN
ENSEMBLES COMBUSTIBLES NUCLÉAIRES DE SUPPORT

(30) Priority: 15.03.2013 US 201361787764 P
(43) Date of publication of application: 20.01.2016
(73) Proprietor: NuScale Power, LLC, Corvallis, OR 97330 (US)
(72) Inventor: CADELL, Seth, Corvallis, Oregon 97330 (US); LISZKAI, Tamas, Corvallis, Oregon 97330 (US)
(74) Representative: Carter, Stephen John
(86) International application number: PCT/US2014/030298
(87) International publication number: WO 2014/204537

(56) References cited:
- WO-A2-2008/137186
- JP-A- 2011 095 017
- US-A- 3 560 338
- US-A- 4 073 685
- US-A1- 2009 129 531
- US-A1- 2010 124 306
- US-A1- 2010 124 306
- US-A1- 2010 172 459

## Description

### TECHNICAL FIELD

This disclosure generally relates to nuclear reactors and, more particular neutron reflectors and support structure for nuclear reactor cores.

### BACKGROUND

Pressurized water reactors include nuclear fuel assemblies that, in some cases, are supported in a reactor pressure vessel of a nuclear reactor module by a baffle plate with reinforcement ribs, typically called former plates. The baffle plate typically surrounds the fuel assemblies and provides lateral support for the fuel assemblies. This structure is typically referred to as a core barrel or baffle-former-barrel assembly or the core shroud. The baffle plate may be assembled in either bolted assemblies or welded assemblies. Vertical restraint of the fuel assemblies is accomplished with the upper and lower core plates. In some instances, the baffle plate provides a secondary function of reflecting fast neutrons back into the fuel assemblies. US 2010/0124306 discloses a reactor vessel with integrated flow-through.

### SUMMARY

The invention is defined by a nuclear reactor system according to claim 1 and by a corresponding method according to claim 11. More specific aspects of the invention are defined in the corresponding dependent claims.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram illustrating a nuclear reactor system;
FIGS. 2A-2B are schematic diagrams showing side and top views, respectively, of a circulation path in a portion of a nuclear reactor system;
FIGS. 3A-3C illustrate side, top, and isometric views, respectively, of an example implementation of a portion of a nuclear reactor system that includes a reflector and core support structure; and
FIGS. 4A-4C illustrate side, top, and isometric views, respectively, of another example implementation of a portion of a nuclear reactor system that includes a reflector and core support structure.

### DETAILED DESCRIPTION

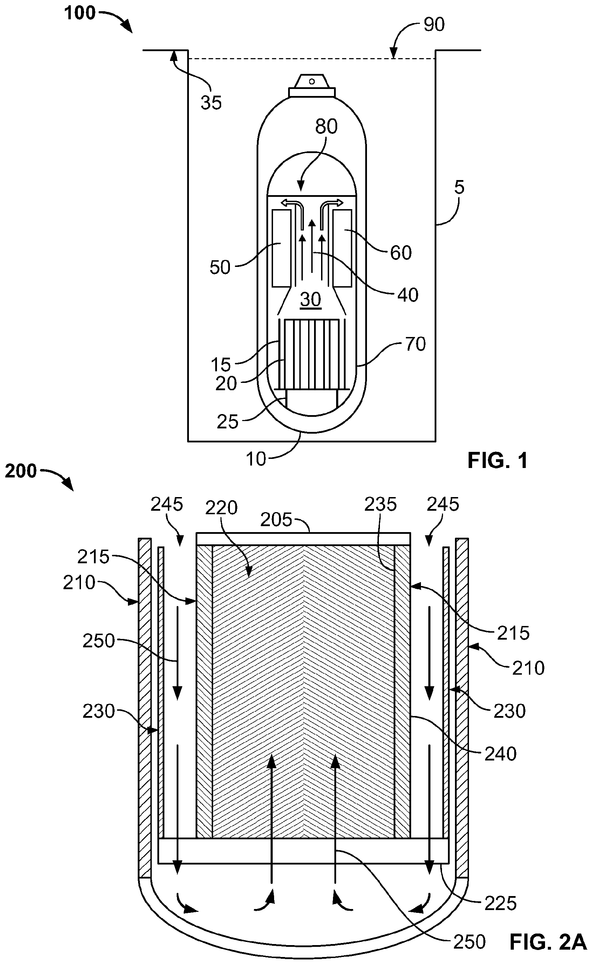

FIG. 1 is a block diagram illustrating a nuclear reactor system 100 (e.g., a nuclear reactor) that includes a core support structure 25 and a neutron reflector 15. In some aspects, the nuclear reactor system 100 is a commercial power pressurized water reactor that utilizes natural circulation of a primary coolant to cool a nuclear core and transfer heat from the core to a secondary coolant through one or more heat exchangers. The secondary coolant (e.g., water), once heated (e.g., to steam, superheated steam or otherwise), can drive power generation equipment, such as steam turbines or otherwise, before being condensed and returned to the one or more heat exchangers.

With respect to the nuclear reactor system 100, a reactor core 20 is positioned at a bottom portion of a cylinder-shaped or capsule-shaped reactor vessel 70. Reactor core 20 includes a quantity of nuclear fuel assemblies, or rods (e.g., fissile material that produces, in combination with control rods, a controlled nuclear reaction), and optionally one or more control rods (not shown). As noted above, in some implementations, nuclear reactors system 100 is designed with passive operating systems (e.g., without a circulation pump for the primary coolant) employing the laws of physics to ensure that safe operation of the nuclear reactor 100 is maintained during normal operation or even in an emergency condition without operator intervention or supervision, at least for some predefined period of time. A cylinder-shaped or capsule-shaped containment vessel 10 surrounds reactor vessel 70 and is partially or completely submerged in a reactor pool, such as below waterline 90 (which may be at or just below a top surface 35 of the bay 5), within reactor bay 5. The volume between reactor vessel 70 and containment vessel 10 may be partially or completely evacuated to reduce heat transfer from reactor vessel 70 to the reactor pool. However, in other implementations, the volume between reactor vessel 70 and containment vessel 10 may be at least partially filled with a gas and/or a liquid that increases heat transfer between the reactor and containment vessels.

In the illustrated example, reactor core 20 is submerged within a liquid, such as water, which may include boron or other additives, which rises into channel 30 after making contact with a surface of the reactor core. The upward motion of heated coolant is represented by arrows 40 (e.g., primary coolant 40) within channel 30 (e.g., riser 30). The coolant travels over the top of heat exchangers 50 and 60 and is drawn downward by density difference along the inner walls of reactor vessel 70 thus allowing the coolant to impart heat to heat exchangers 50 and 60. After reaching a bottom portion of the reactor vessel 70, contact with reactor core 20 results in heating the coolant, which again rises through channel 30. Although heat exchangers 50 and 60 are shown as two distinct elements in FIG. 1, heat exchangers 50 and 60 may represent any number of helical (or other shape) coils that wrap around at least a portion of channel 30.

Normal operation of the nuclear reactor module proceeds in a manner wherein heated coolant rises through channel 30 and makes contact with heat exchangers 50 and 60. After contacting heat exchangers 50 and 60, the coolant sinks towards the bottom of reactor vessel 70 in a manner that induces a thermal siphoning process. In the example of FIG. 1, coolant within reactor vessel 70 remains at a pressure above atmospheric pressure, thus allowing the coolant to maintain a high temperature without vaporizing (e.g., boiling).

As coolant within heat exchangers 50 and 60 increases in temperature, the coolant may begin to boil. As the coolant within heat exchangers 50 and 60 begins to boil, vaporized coolant, such as steam, may be used to drive one or more turbines that convert the thermal potential energy of steam into electrical energy. After condensing, coolant is returned to locations near the base of heat exchangers 50 and 60.

The illustrated core support structure 25 provides axial support (e.g., at a top and/or bottom end) to the fuel assemblies in the core 20. At a high level, the core support structure 25 vertically restrains the fuel assemblies in the core 20 through upper and lower plates that are mounted adjacent top and bottom ends, respectively of the core assemblies. Lateral restraint of the fuel assemblies may be accomplished with a solid or semi-solid wall of the support structure 25 that surrounds the core 20. The support structure 25, generally, restrains the fuel assemblies in the core 20 during both normal operation as well as during an emergency event, such as a seismic event.

In the illustrated example, and as discussed more fully below, a downcomer region between the reflector 15 and the reactor vessel 70 provides a fluid path for the primary coolant 40 flowing in an annulus between the riser 30 and the reactor vessel 70 from a top end of the vessel 70 (e.g., after passing over the heat exchangers 50, 60) and a bottom end of the vessel 70 (e.g., below the core 20). The fluid path channels primary coolant 40 that has yet to be recirculated through the core 20 into convective contact with at least one surface of the reflector 15 in order to cool the reflector 15.

Together, the reflector 15 and core support structure 25 may provide the following functionality. For example, one or both of these components may provide structural support and orientation of the fuel assemblies, control rod assemblies, and in-core instrumentation. Further, one or both of these components may be designed for at least a 60 year life in the illustrated environment that includes the primary coolant 40 and radiation from nuclear fission in the core 20. Further, one or both components may be configured to form a closed natural circulation circuit while minimizing flow resistance in the nuclear reactor system 100 operating with a passive circulation system (e.g., no pumps for the primary coolant 40). One or both components may also provide for neutron reflection capability (e.g., back into the core 20) as well as neutron and gamma shielding for the reactor vessel 70 and the containment vessel 10.

Reflector material may impact neutron reflection back into the core 20, and thus neutron efficiency (e.g., k_{eff}, which is a measure of criticality of an operating reactor, with 1 being stable, >1 indicating increasing power, and <1 indicating decreasing power). For example, in a pressurized water reactor, on average of 2.9%-9% of the neutrons born from fission can leak out of the core). Neutron leakage can directly affect the needed fuel enrichment and the fuel's effective burn life, which can affect operating costs. In some aspects, the reflector 15 has a low absorption cross-section and a high scattering cross-section, thereby increasing reflection of fast neutrons back into the core 20 with minimal energy change to allow the neutron to thermalize in the fueled region of the core 20.

In some aspects of the illustrated example, the reflector 15 may be made from alumina. Alumina (Al₂O₃) is a naturally occurring mineral and product of aluminum oxidation. Alumina melts in air at 2050°C and has good resistance to thermal shock; other properties include a density of 3.95 g/cc, a coefficient of thermal expansion (CTE) of 8.50x10⁻⁶ at a temperature of 500°C. Alumina crystal also is easy to use and is insoluble in water and not toxic. In the illustrated implementation, a core with the reflector 15 made of alumina has a k_{eff} of 1.0 (e.g., with a specified amount of boron concentration) at a thickness of about 0.5" increasing to a k_{eff} of about 1.022 at a thickness of about 5" (e.g., with the specified amount of boron). Since a k_{eff} of 1.0 is desired for stable operation of the nuclear reactor 100, enrichment of the nuclear fuel could be decreased at a reflector thickness greater than 0.5" (e.g., at 4.5"), thereby increasing efficiency.

In some aspects of the illustrated example, the reflector 15 may be made from beryllia. Beryllia (BeO) is a ceramic material. Beryllia has a density of 3.01 g/cc and a CTE of 8.00x10⁻⁶ at a temperature of 500°C. In the illustrated implementation, the reflector 15 made of beryllia has a k_{eff} of 1.0 at a thickness of about 0.5" increasing to a k_{eff} of about 1.026 at a thickness of about 4.5". Since a k_{eff} of 1.0 is desired for stable operation of the nuclear reactor 100, enrichment of the nuclear fuel could be decreased at a reflector thickness greater than 0.5", thereby increasing efficiency.

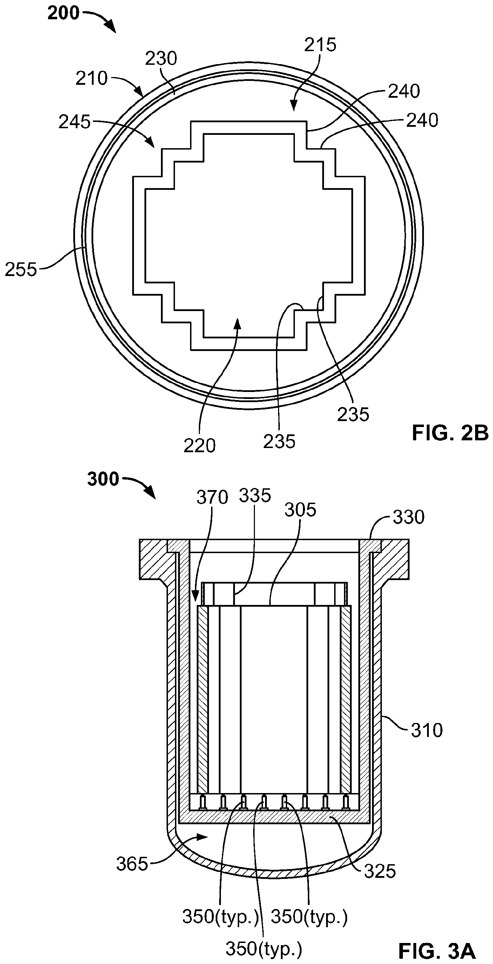

FIGS. 2A-2B are schematic diagrams showing side and top views, respectively, of a circulation path in a portion of a nuclear reactor system 200. In some aspects, the system 200 may be a portion of the illustrated system 100 of FIG. 1, or another nuclear reactor system (e.g., another passive circulation nuclear reactor system). At a high level, the system 200 includes a downflow arrangement in which a primary coolant 250 is circulated (e.g., naturally) from a top end of a reactor vessel 210 toward a bottom end of the vessel 210 in order to cool a reflector 215 that is positioned adjacent (e.g., around) a core 220 that includes nuclear fuel assemblies.

As illustrated in this example, a core support structure includes an upper support plate 205 positioned above (e.g., at a top end) the core 220 (e.g., between the core 220 and a riser, not shown). The support structure also includes a lower support plate 225 positioned below (e.g., at a bottom end) of the core 220 and sized to extend around a perimeter of an inside surface of the reactor vessel 210. The support structure also includes a core barrel 230 positioned adjacent the inside surface of the reactor vessel 210, with a relatively small annulus 255 therebetween. Together, the upper and lower support plates 205 and 225 and the core barrel 230 may provide axial and lateral support to the core 220, such as during normal operation as well as during an emergency operation, such as a seismic event.

One or both of the plates 205 and 225 may include holes or apertures to allow fluid communication therethrough (e.g., of the primary coolant 250). For example, as illustrated, primary coolant 250 may be circulated (e.g., naturally) downward in an annulus 245 between the reflector 215 and the core barrel 230. The coolant 250, in part due to a radiussed bottom portion of the reactor vessel 210, turns toward a center of the vessel 210 and upward through the core 220. As the primary coolant 250 circulates through the core 220, heat is transferred (e.g., from energy released from fission) to the coolant 250. Such heat is eventually transferred to a secondary coolant that is circulated in heat exchangers, e.g., mounted adjacent a riser of the nuclear reactor vessel 200 (not shown) as explained above.

The reflector 215 (which could be made of alumina, beryllia, or another material), as illustrated in FIGS. 2A-2B, may surround the core 220 and reflect neutrons that leak from the core 220 back into the core 220. As a result, the reflector 215 may reach high temperatures and require cooling. An inner face 235 of the reflector 215 is at least partially cooled by the flow of primary coolant 250 through the core 220. An outer face 240 of the reflector 215, as illustrated, by the downflow of the primary coolant 250 in the annulus 245 between the reflector 215 and the core barrel 230. As illustrated, all or a substantial portion of the primary coolant flow 250 is circulated through the core 220 without bypassing the core 220 to flow through the reflector 215. Thus, all or substantially all of the cooling of the reflector 215 may come from the downflow of coolant 250 in the annulus 245 (on the outer face 240) and the upflow of the primary coolant 250 (on the inner face 235) through the core 220.

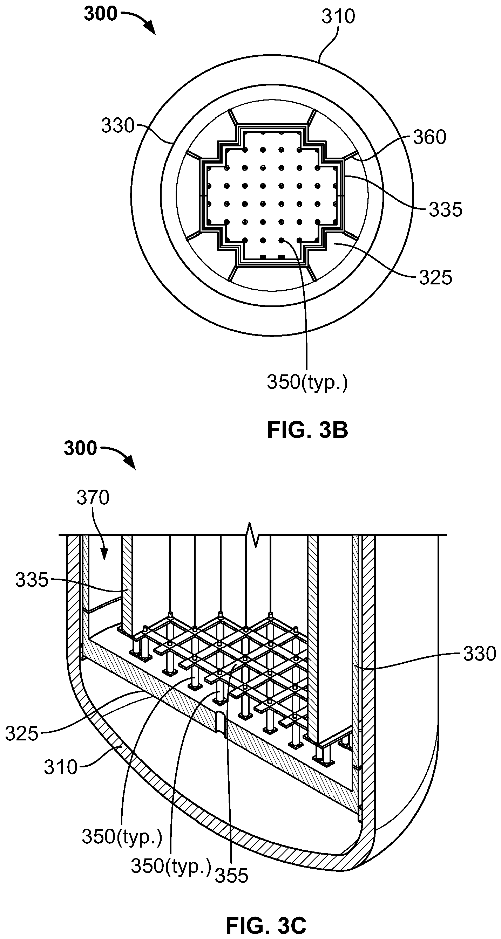

FIGS. 3A-3C illustrate side, top, and isometric views, respectively, of an example implementation of a portion of a nuclear reactor system 300 that includes a reflector 335 and a core support structure. Generally, the example implementation of the nuclear reactor system 300 facilitates a downflow arrangement of a primary coolant through an annulus 370 between a core barrel 330 and the reflector 335 that is similar to or the same as the downflow arrangement shown in FIGS. 2A-2B. Moreover, as illustrated, a core support structure includes an upper plate 305 mounted above a core 320 (e.g., that includes fuel assemblies during operation), a lower plate 325 mounted below the core 320, and multiple posts 350.

As illustrated, the posts 350 extend from the lower plate 325 and support fuel assemblies (e.g., one fuel assembly per post 350) and lift the fuel assemblies away from and above the lower plate 325. In the illustrated implementation, the reflector 335 also sits on posts 350 and is supported by the posts 350, thereby separating the reflector 335 apart from the lower plate 325.

In the illustrated implementation, the reflector 335 includes fins 360 that extend radially outward from a center of the reactor vessel 310 and engage the core barrel 330. The fins 360, in some aspects, may provide or help provide lateral support for the fuel assemblies positioned in the core 320.

Turning to FIG. 3C particularly, another example aspect of the nuclear reactor system 300 is shown. In this aspect, the posts 350 are coupled to a lower core plate 355 that forms a support area for fuel assemblies. Thus, in this aspect, fuel assemblies may not be supported directly on the posts 350 but instead may be directly supported by the lower core plate 355.

In operation of the nuclear reactor system 300, primary coolant may be circulated (e.g., naturally) downward from an upper part of the system 300 (not shown), for example, after circulating through a riser and past heat exchangers, in the annulus 370 between the core barrel 330 and the reflector 335. As the primary coolant passes the reflector 335 in the downcomer annulus 370, heat is transferred to the coolant from the reflector 335 (e.g., from an outer face of the reflector 335). The primary coolant circulates under the reflector 335 (e.g., that is raised on posts 350), around the posts 350, and up through the core 320. As the coolant circulates through the core 320, heat is transferred from fuel assemblies and an inner face of the reflector 335 to the coolant as it circulated upward toward an upper end of the system 300.

In some aspects, an annulus between the core barrel 330 and the reactor vessel 310 is filled with primary coolant, but at a minimal flow rate through this region. For example, orifices in the core barrel 330 may be installed to allow trapped air to exit this annulus as the system fills with primary coolant, and a small amount of coolant may pass through this annulus during operations. This coolant flow, in some aspects, may ensure the coolant in this region does not boil.

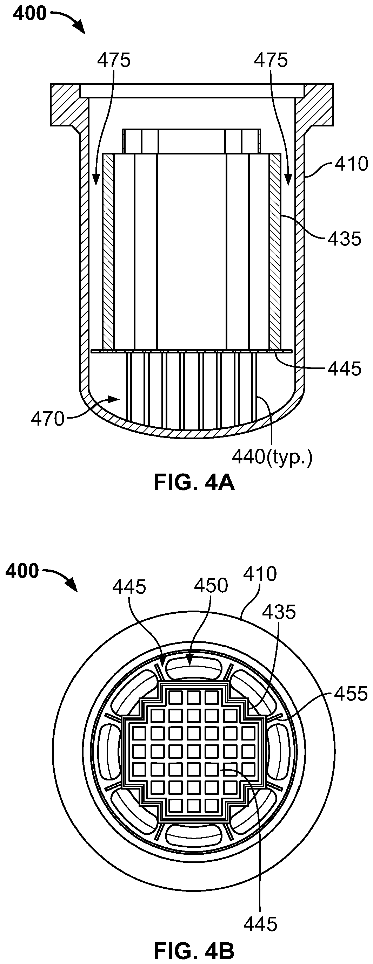

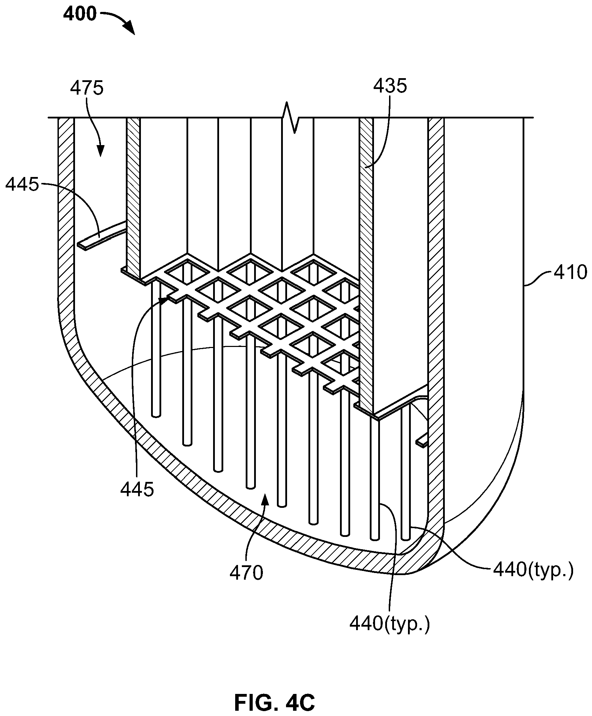

FIGS. 4A-4C illustrate side, top, and isometric views, respectively, of another example implementation of a portion of a nuclear reactor system 400 that includes a reflector 435 and core support structure that includes posts 440 and a lower core plate 445 but does not include a core barrel. In some aspects, the nuclear reactor system 400, like the system 300, includes a downflow arrangement in which a primary coolant flow is circulated downward from a top portion of the system 400 (e.g., through an annulus between a riser (not shown) and a reactor vessel 410), through an annulus 475, and then upward through a core 420. The downflow circulation, in some aspects, may cool an outer surface of the reflector 435 while the upflow circulation (e.g., through the core 420) may cool an inner surface of the reflector 435.

Due to, for instance, removal of the core barrel from the system 400, a weight of the core (e.g., fuel assemblies in the core) be transferred to the reactor vessel 410 via the posts 440, the lower core plate 445, and the reflector 435. For example, the posts 440 may transfer a portion of the load from the lower core plate 445 to a radiussed bottom portion of the reactor vessel 410. This interface may provide both the upward and downward loads for the fuel assemblies in the core 420. For example, the downward load may simply be carried through the posts 440 while the upward load may be carried through a locking mechanism that transfers the fuel's upward acceleration forces, occurring during seismic events, from the upper core support plate through the reflector 435.

Turning back to FIGS. 4A-4C, lateral support of the fuel assemblies in the core 420 can be carried from the lower core plate 445 to the reflector 435 and to support fins 455 that are coupled (e.g., attached) to the reactor vessel 410. In some aspects, such a support system can provide for a large volume below the core 420. In some aspects, the volume can be reduced by lowering the core 420, which will, in turn, increase pumping power required to circulate the primary coolant through the core 420 (e.g., in a forced circulation system) but decrease the power required to circulate the primary coolant in a natural circulation system.

As illustrated, the lower core plate 445 may include multiple apertures 450 therethrough, such as, for example, substantially square shaped apertures toward a center of the lower core plate 445 and substantially oval shaped apertures toward a perimeter of the lower core plate 445 (although other shapes are possible and contemplated by the present disclosure). In some aspects, the apertures 450 may provide for fluid communication between a volume of a lower portion of the reactor vessel 410 beneath the core 420 and the core 420. In some aspects, the lower core plate 445 may not include any apertures and fluid can be circulated

In operation of the nuclear reactor system 400, primary coolant may be circulated (e.g., naturally) downward from an upper part of the system 400 (not shown), for example, after circulating through a riser and past heat exchangers, in the annulus 475 between the reactor vessel 410 and the reflector 435. As the primary coolant passes the reflector 435 in the downcomer annulus 475, heat is transferred to the coolant from the reflector 435 (e.g., from an outer face of the reflector 435). The primary coolant circulates into a lower volume 470 of the reactor vessel 410, around the posts 440, and up through the lower core plate 445 and into the core 420. As the coolant circulates through the core 420, heat is transferred from fuel assemblies and an inner face of the reflector 435 to the coolant as it circulated upward toward an upper end of the system 400.

A number of implementations have been described. Nevertheless, it will be understood that various modifications may be made. For example, advantageous results may be achieved if the steps of the disclosed techniques were performed in a different sequence, if components in the disclosed systems were combined in a different manner, or if the components were replaced or supplemented by other components. Accordingly, other implementations are within the scope of the following claims.

## Claims

1. A nuclear reactor system (200, 300, 400), comprising:
a reactor vessel (70, 210, 310, 410) that comprises an interior volume;
a core (20, 220, 320, 420) that comprises one or more nuclear fuel assemblies;
a riser (30) that extends from a top portion of the core through the interior volume of the reactor vessel towards an upper half of the reactor vessel;
a neutron reflector (15, 215, 335, 435) that comprises an inner face that surrounds lateral sides of the core and an outer face opposite the inner face;
a core support structure (25) that comprises one or more support posts (350, 440) that extend from near a bottom portion of the reactor vessel (70, 210, 310, 410) towards the core to support the one or more nuclear fuel assemblies; and
a primary coolant flow path contained within the reactor vessel that extends from the riser (30) toward the upper half of the reactor vessel (70, 210, 310, 410), from the upper half of the reactor vessel in a downflow toward the bottom portion of the reactor vessel between the outer face of the neutron reflector (15, 215, 335, 435) and the reactor vessel, and from the bottom portion of the reactor vessel around the one or more support posts (350, 440) through the core and to the riser,
wherein the core support structure further comprises a core barrel (230, 330) that is positioned between the neutron reflector (15, 215, 335, 435) and the reactor vessel (70, 210, 310, 410), and the primary coolant flow path extends in the downflow toward the bottom portion of the reactor vessel through an annulus between the outer face of the neutron reflector (15, 215, 335, 435) and an inner surface of the core barrel (230, 330).

2. The nuclear reactor system of claim 1, further comprising fins (360) extending radially outward from a centre of the reactor vessel (70, 210, 310, 410) and engaging the core barrel (330).

3. The nuclear reactor system of claim 1, wherein the core support structure further comprises a lower support plate (225,325) positioned in the bottom portion of the reactor vessel (70, 210, 310, 410) and extending toward an interior surface of the reactor vessel, the one or more support posts (350, 440) extending from the lower support plate towards the core (20, 220, 320, 420).

4. The nuclear reactor system of claim 3, wherein the one or more support plates (225, 325) are in contacting engagement with a bottom surface of the reflector (15, 215, 335, 435), and the primary coolant flow path extends from the annulus to the bottom portion of the reactor vessel between the lower support plate and the bottom surface of the reflector.

5. The nuclear reactor system of claim 3, wherein the core support structure further comprises a lower core plate (355) coupled to the one or more support posts (350) and forming a support area for the one or more fuel assemblies.

6. The nuclear reactor system of claim 1, wherein the one or more support posts (350, 440) extend from a radiussed inner surface of the reactor vessel (70, 210, 310, 410) through the bottom portion of the reactor vessel and towards the core, and the primary coolant flow path extends from the annulus to the bottom portion of the reactor vessel and around the one or more support posts.

7. The nuclear reactor system of claim 6, further comprising a lower core plate (445) supported on the one or more support posts (440) between the posts and the one or more fuel assemblies, and the primary coolant flow path extends from around the posts through one or more apertures in the lower core plate to the core.

8. The nuclear reactor system of claim 1, wherein a portion of the system comprises one of alumina or beryllia.

9. The nuclear reactor system of claim 8, wherein the reflector comprises one of alumina or beryllia.

10. The nuclear reactor system of claim 6, wherein the core support structure further comprises an upper plate (305) mounted above the core (20, 220, 320, 420), the core being positioned between the lower support plate (325) and the upper plate.

11. A method, comprising:
providing a nuclear reactor system (100, 200, 300, 400) that comprises a reactor vessel (70, 210, 310, 410) that comprises an interior volume, a core (20, 220, 320, 420) that comprises one or more nuclear fuel assemblies surrounded by a neutron reflector (15, 215, 335, 435), a riser (30) that extends from a top portion of the core through an interior volume of the reactor vessel towards an upper half of the reactor vessel, and a core support structure (25);
the core support structure (25) comprising a core barrel (230, 330) that is positioned between the neutron reflector (15, 215, 335, 435) and the reactor vessel (70, 210, 310, 410), a primary coolant flow path extending in a downflow direction toward the bottom portion of the reactor vessel through an annulus between the neutron reflector (15, 215, 335, 435) and the core barrel (230, 330);
circulating a flow of primary coolant from the riser upward toward an upper half of the reactor vessel;
circulating the flow of primary coolant from the upper half of the reactor vessel downward to a bottom portion of the reactor vessel through the annulus between the neutron reflector and the core barrel (230, 330);
circulating the flow of primary coolant from the bottom portion of the reactor vessel around one or more support posts (350, 440) of the core support structure (25) that support the fuel assemblies and through the core; and
circulating the flow of primary coolant from the core to the riser (30) in a region between the fuel assemblies and an inner surface of the reflector.

12. The method of claim 11, wherein the core support structure (25) further comprises a lower support plate (225, 325) positioned in the bottom portion of the reactor vessel (70, 210, 310, 410) and extending toward an interior surface of the reactor vessel and the one or more support posts (350, 440) extend from the lower support plate into contacting engagement with a bottom surface of the reflector, and circulating the flow of primary coolant from the bottom portion of the reactor vessel around one or more support posts of the core support structure (25) that support the fuel assemblies and through the core comprises:
circulating the flow of primary coolant from the annulus to the bottom portion of the reactor vessel between the lower support plate and the bottom surface of the reflector.

13. The method of claim 12, wherein the core support structure further comprises a lower core plate (355) coupled to the one or more support posts (350) and forming a support area for the one or more fuel assemblies, the method further comprising circulating the flow of primary coolant from between the lower support plate and the bottom surface of the reflector through the lower core plate (355) supported on the one or more support posts (350, 440) between the posts and the one or more fuel assemblies and to the core (20, 220, 320, 420).

14. The method of claim 11, wherein the one or more support posts (350, 440) extend from a radiussed inner surface of the reactor vessel through the bottom portion of the reactor vessel and towards the core (20, 220, 320, 420).

## Patentansprüche

1. Nukleares Reaktorsystem (200, 300, 400), umfassend:
ein Reaktorgefäß (70, 210, 310, 410), das ein Innenvolumen umfasst;
einen Kern (20, 220, 320, 420), der eine oder mehrere nukleare Brennstoffanordnungen umfasst;
eine Steigleitung (30), die sich von einem oberen Abschnitt des Kerns durch das Innenvolumen des Reaktorgefäßes hin zu einer oberen Hälfte des Reaktorgefäßes erstreckt;
einen Neutronenreflektor (15, 215, 335, 435), der eine Innenseite umfasst, die Seitenflächen des Kerns umgibt, sowie eine Außenseite, die der Innenseite entgegengesetzt ist;
eine Kernstützstruktur (25), die einen oder mehrere Stützpfeiler (350, 440) umfasst, die sich von nahe einem Bodenabschnitt des Reaktorgefäßes (70, 210, 310, 410) hin zum Kern erstrecken, um die eine oder die mehreren nuklearen Brennstoffanordnungen zu stützen; und
einen primären Kühlmittelströmungspfad, der im Reaktorgefäß enthalten ist und sich von der Steigleitung (30) hin zur oberen Hälfte des Reaktorgefäßes (70, 210, 310, 410), von der oberen Hälfe des Reaktorgefäßes in einer Fallströmung hin zum Bodenabschnitt des Reaktorgefäßes zwischen der Außenseite des Neutronenreflektors (15, 215, 335, 435) und dem Reaktorgefäß sowie vom Bodenabschnitt des Reaktorgefäßes rund um den einen oder die mehreren Stützpfeiler (350, 440) durch den Kern und zur Steigleitung erstreckt,
worin die Kernstützstruktur ferner einen Kernmantel (230, 330) umfasst, der zwischen dem Neutronenreflektor (15, 215, 335, 435) und dem Reaktorgefäß (70, 210, 310, 410) positioniert ist, und sich der primäre Kühlmittelströmungspfad in der Fallströmung hin zum Bodenabschnitt des Reaktorgefäßes durch einen Ringraum zwischen der Außenseite des Neutronenreflektors (15, 215, 335, 435) und einer Innenfläche des Kernmantels (230, 330) erstreckt.

2. Nukleares Reaktorsystem nach Anspruch 1, das ferner Rippen (360) umfasst, die sich von einem Mittelpunkt des Reaktorgefäßes (70, 210, 310, 410) radial nach außen erstrecken und in den Kernmantel (330) eingreifen.

3. Nukleares Reaktorsystem nach Anspruch 1, worin die Kernstützstruktur ferner eine untere Stützplatte (225, 325) umfasst, die im Bodenabschnitt des Reaktorgefäßes (70, 210, 310, 410) positioniert ist und sich hin zu einer Innenfläche des Reaktorgefäßes erstreckt, wobei sich der eine oder die mehreren Stützpfeiler (350, 440) von der unteren Stützplatte hin zum Kern (20, 220, 320, 420) erstrecken.

4. Nukleares Reaktorsystem nach Anspruch 3, worin die eine oder die mehreren Stützplatten (225, 325) in Kontakteingriff mit einer Bodenfläche des Reflektors (15, 215, 335, 435) sind und sich der primäre Kühlmittelströmungspfad vom Ringraum zum Bodenabschnitt des Reaktorgefäßes zwischen der unteren Stützplatte und der Bodenfläche des Reflektors erstreckt.

5. Nukleares Reaktorsystem nach Anspruch 3, worin die Kernstützstruktur ferner eine untere Kernplatte (355) umfasst, die mit dem einen oder den mehreren Stützpfeilern (350) gekoppelt ist und einen Stützbereich für die eine oder die mehreren Brennstoffanordnungen bildet.

6. Nukleares Reaktorsystem nach Anspruch 1, worin sich der eine oder die mehreren Stützpfeiler (350, 440) von einer kreisförmigen Innenfläche des Reaktorgefäßes (70, 210, 310, 410) durch den Bodenabschnitt des Reaktorgefäßes und hin zum Kern erstrecken und sich der primäre Kühlmittelströmungspfad vom Ringraum zum Bodenabschnitt des Reaktorgefäßes und rund um den einen oder die mehreren Stützpfeiler erstreckt.

7. Nukleares Reaktorsystem nach Anspruch 6, das ferner eine untere Kernplatte (445) umfasst, die auf dem einen oder den mehreren Stützpfeilern (440) zwischen den Pfeilern und der einen oder den mehreren Brennstoffanordnungen gestützt wird, und wobei sich der primäre Kühlmittelströmungspfad von rund um die Pfeiler durch eine oder mehrere Öffnungen in der unteren Kernplatte zum Kern erstreckt.

8. Nukleares Reaktorsystem nach Anspruch 1, worin ein Abschnitt des Systems eines aus Aluminiumoxid oder Berylliumoxid umfasst.

9. Nukleares Reaktorsystem nach Anspruch 8, worin der Reflektor eines aus Aluminiumoxid oder Berylliumoxid umfasst.

10. Nukleares Reaktorsystem nach Anspruch 6, worin die Kernstützstruktur ferner eine obere Platte (305) umfasst, die über dem Kern (20, 220, 320, 420) montiert ist, wobei der Kern zwischen der unteren Stützplatte (325) und der oberen Platte positioniert ist.

11. Verfahren, umfassend:
Bereitstellen eines nuklearen Reaktorsystems (100, 200, 300, 400), das ein ein Innenvolumen umfassendes Reaktorgefäß (70, 210, 310, 410), einen Kern (20, 220, 320, 420), der eine oder mehrere nukleare Brennstoffanordnungen umfasst und von einem Neutronenreflektor (15, 215, 335, 435) umgeben ist, eine Steigleitung (30), die sich von einem oberen Abschnitt des Kerns durch ein Innenvolumen des Reaktorgefäßes hin zu einer oberen Hälfte des Reaktorgefäßes erstreckt, sowie eine Kernstützstruktur (25) umfasst,
wobei die Kernstützstruktur (25) einen Kernmantel (230, 330) umfasst, der zwischen dem Neutronenreflektor (15, 215, 335, 435) und dem Reaktorgefäß (70, 210, 310, 410) positioniert ist, und sich ein primärer Kühlmittelströmungspfad in einer Fallströmungsrichtung hin zum Bodenabschnitt des Reaktorgefäßes durch einen Ringraum zwischen dem Neutronenreflektor (15, 215, 335,435) und dem Kernmantel (230, 330) erstreckt;
Zirkulieren einer primären Kühlmittelströmung von der Steigleitung nach oben hin zu einer oberen Hälfte des Reaktorgefäßes;
Zirkulieren der primären Kühlmittelströmung von der oberen Hälfte des Reaktorgefäßes nach unten zu einem Bodenabschnitt des Reaktorgefäßes durch den Ringraum zwischen dem Neutronenreflektor und dem Kernmantel (230, 330);
Zirkulieren der primären Kühlmittelströmung vom Bodenabschnitt des Reaktorgefäßes rund um einen oder mehrere Stützpfeiler (350, 440) der Kernstützstruktur (25), welche die Brennstoffanordnungen stützen, und durch den Kern; sowie
Zirkulieren der primären Kühlmittelströmung vom Kern zur Steigleitung (30) in einer Region zwischen den Brennstoffanordnungen und einer Innenfläche des Reflektors.

12. Verfahren nach Anspruch 11, worin die Kernstützstruktur (25) ferner eine untere Stützplatte (225, 325) umfasst, die im Bodenabschnitt des Reaktorgefäßes (70, 210, 310, 410) positioniert ist und sich hin zu einer Innenfläche des Reaktorgefäßes erstreckt, und sich der eine oder die mehreren Stützpfeiler (350, 440) von der unteren Stützplatte bis in einen Kontakteingriff mit einer Bodenfläche des Reflektors erstrecken, und das Zirkulieren der primären Kühlmittelströmung vom Bodenabschnitt des Reaktorgefäßes rund um einen oder mehrere, die Brennstoffanordnungen stützende Stützpfeiler der Kernstützstruktur (25) und durch den Kern Folgendes umfasst:
Zirkulieren der primären Kühlmittelströmung vom Ringraum zum Bodenabschnitt des Reaktorgefäßes zwischen der unteren Stützplatte und der Bodenfläche des Reflektors.

13. Verfahren nach Anspruch 12, worin die Kernstützstruktur ferner eine untere Kernplatte (355) umfasst, die mit dem einen oder den mehreren Stützpfeilern (350) gekoppelt ist und einen Stützbereich für die eine oder die mehreren Brennstoffanordnungen bildet, wobei das Verfahren ferner das Zirkulieren der primären Kühlmittelströmung von zwischen der unteren Stützplatte und der Bodenfläche des Reflektors durch die untere Kernplatte (355), die auf dem einen oder den mehreren Stützpfeilern (350, 440) gestützt ist, zwischen den Stützpfeilern und der einen oder den mehreren Brennstoffanordnungen und zum Kern (20, 220, 320, 420) umfasst.

14. Verfahren nach Anspruch 11, worin sich der eine oder die mehreren Stützpfeiler (350, 440) von einer kreisförmigen Innenfläche des Reaktorgefäßes durch den Bodenabschnitt des Reaktorgefäßes und hin zum Kern (20, 220, 320, 420) erstrecken.

## Revendications

1. Système de réacteur nucléaire (200, 300, 400), comprenant :
une cuve de réacteur (70, 210, 310, 410) qui comprend un volume intérieur ;
un coeur (20, 220, 320, 420) qui comprend un ou plusieurs ensembles de combustible nucléaire ;
une colonne montante (30) qui s'étend à partir d'une partie supérieure du coeur à travers le volume intérieur de la cuve de réacteur vers une moitié supérieure de la cuve de réacteur ;
un réflecteur de neutrons (15, 215, 335, 435) qui comprend une face interne qui entoure des côtés latéraux du coeur et une face externe opposée à la face interne ;
une structure de support de coeur (25) qui comprend un ou plusieurs montants de support (350, 440) qui s'étendent à proximité d'une partie inférieure de la cuve de réacteur (70, 210, 310, 410) vers le coeur pour supporter les un ou plusieurs ensembles de combustible nucléaire ; et
un trajet d'écoulement de liquide de refroidissement principal contenu dans la cuve de réacteur qui s'étend à partir de la colonne montante (30) vers la moitié supérieure de la cuve de réacteur (70, 210, 310, 410), à partir de la moitié supérieure du réacteur dans un écoulement descendant vers la partie inférieure de la cuve de réacteur entre la face externe du réflecteur de neutrons (15, 215, 335, 435), et la cuve de réacteur, et à partir de la partie inférieure de la cuve de réacteur autour des un ou plusieurs montants de support (350, 440) à travers le coeur et jusqu'à la colonne montante,
dans lequel la structure de support de coeur comprend en outre un corps cylindrique de coeur (230, 330) qui est positionné entre le réflecteur de neutrons (15, 215, 335, 435) et la cuve de réacteur (70, 210, 310, 410), et le trajet d'écoulement de liquide de refroidissement principal s'étend dans l'écoulement descendant vers la partie inférieure de la cuve de réacteur à travers un espace annulaire entre la face externe du réflecteur de neutrons (15, 215, 335, 435) et une surface interne du corps cylindrique de coeur (230, 330).

2. Système de réacteur nucléaire selon la revendication 1, comprenant des ailettes (360) s'étendant radialement vers l'extérieur à partir d'un centre de la cuve de réacteur (70, 210, 310, 410) et venant en prise avec le corps cylindrique de coeur (330).

3. Système de réacteur nucléaire selon la revendication 1, dans lequel la structure de support de coeur comprend en outre une plaque de support inférieure (225, 325) positionnée dans la partie inférieure de la cuve de réacteur (70, 210, 310, 410) et s'étendant vers une surface intérieure de la cuve de réacteur, les un ou plusieurs montants de support (350, 440) s'étendant à partir de la plaque de support inférieure vers le coeur (20, 220, 320, 420).

4. Système de réacteur nucléaire selon la revendication 3, dans lequel les une ou plusieurs plaques de support (225, 325) sont en contact de coopération avec une surface inférieure du réflecteur (15, 215, 335, 435), et le trajet d'écoulement de liquide de refroidissement principal s'étend à partir de l'espace annulaire jusqu'à la partie inférieure du réacteur entre la plaque de support inférieure et la surface inférieure du réflecteur.

5. Système de réacteur nucléaire selon la revendication 3, dans lequel la structure de support de coeur comprend en outre une plaque de coeur inférieure (355) couplée aux un ou plusieurs montants de support (350) et formant une zone de support pour les un ou plusieurs ensembles de combustible.

6. Système de réacteur nucléaire selon la revendication 1, dans lequel les un ou plusieurs montants de support (350, 440) s'étendent à partir d'une surface interne arrondie de la cuve de réacteur (70, 210, 310, 410) à travers la partie inférieure de la cuve de réacteur et vers le coeur, et le trajet d'écoulement de liquide de refroidissement principal s'étend à partir de l'espace annulaire jusqu'à la partie inférieure de la cuve de réacteur et autour des un ou plusieurs montants de support.

7. Système de réacteur nucléaire selon la revendication 6, comprenant une plaque de coeur inférieure (445) supportée sur les un ou plusieurs montants de support (440) entre les montants et les un ou plusieurs ensembles de combustible, et le trajet d'écoulement de liquide de refroidissement principal s'étend à partir d'autour des montants à travers une ou plusieurs ouvertures dans la plaque de coeur inférieure jusqu'au coeur.

8. Système de réacteur nucléaire selon la revendication 1, dans lequel une partie du système comprend de l'alumine ou de l'oxyde de béryllium.

9. Système de réacteur nucléaire selon la revendication 8, dans lequel le réflecteur comprend de l'alumine ou de l'oxyde de béryllium.

10. Système de réacteur nucléaire selon la revendication 6, dans lequel la structure de support de coeur comprend en outre une plaque supérieure (305) montée au-dessus du coeur (20, 220, 320, 420), le coeur étant positionné entre la plaque de support inférieure (325) et la plaque supérieure.

11. Procédé, comprenant les étapes consistant à :
fournir un système de réacteur nucléaire (100, 200, 300, 400) qui comprend une cuve de réacteur (70, 210, 310, 410), qui comprend un volume intérieur, un coeur (20, 220, 320, 420) qui comprend un ou plusieurs ensembles de combustible nucléaire entouré d'un réflecteur de neutrons (15, 215, 335, 435), une colonne montante (30) qui s'étend à partir d'une partie supérieure du coeur à travers un volume intérieur de la cuve de réacteur vers une moitié supérieure de la cuve de réacteur, et une structure de support de coeur (25) ;
la structure de support de coeur (25) comprend un corps cylindrique de coeur (230, 330) qui est positionné entre le réflecteur de neutrons (15, 215, 335, 435) et la cuve de réacteur (70, 210, 310, 410), un trajet d'écoulement de liquide de refroidissement principal s'étendant dans une direction d'écoulement descendant vers la partie inférieure de la cuve de réacteur à travers un espace annulaire entre le réflecteur de neutrons (15, 215, 335, 435) et le corps cylindrique de coeur (230, 330) ;
faire circuler un écoulement de liquide de refroidissement principal à partir de la colonne montante en direction d'une moitié supérieure de la cuve de réacteur ;
faire circuler l'écoulement de liquide de refroidissement principal à partir de la moitié supérieure de la cuve de réacteur jusqu'à une partie inférieure de la cuve de réacteur à travers l'espace annulaire entre le réflecteur de neutrons et le corps cylindrique de coeur (230, 330) ;
faire circuler l'écoulement de liquide de refroidissement principal à partir de la partie inférieure de la cuve de réacteur autour des un ou plusieurs montants de support (350, 440) de la structure de support de coeur (25) qui supportent les ensembles de combustible et à travers le coeur ; et
faire circuler l'écoulement de liquide de refroidissement principal à partir du coeur vers la colonne montante (30) dans une région entre les ensembles de combustible et une surface interne du réflecteur.

12. Procédé selon la revendication 11, dans lequel la structure de support de coeur (25) comprend en outre une plaque de support inférieure (225, 325) positionnée dans la partie inférieure de la cuve de réacteur (70, 210, 310, 410), et s'étendant vers une surface intérieure de la cuve de réacteur, et les un ou plusieurs montants de support (350, 440) s'étendent à partir de la plaque de support inférieure en contact de coopération avec une surface inférieure du réflecteur, et font circuler l'écoulement de liquide de refroidissement principal à partir de la partie inférieure de la cuve de réacteur autour des un ou plusieurs montants de la structure de support de coeur (25) supportant les ensembles de combustible et à travers le coeur, comprenant l'étape consistant à :
faire circuler l'écoulement de liquide de refroidissement principal à partir de l'espace annulaire jusqu'à la partie inférieure de la cuve de réacteur entre la plaque de support inférieure et la surface inférieure du réflecteur.

13. Procédé selon la revendication 12, dans lequel la structure de support de coeur comporte en outre une plaque de coeur inférieure (355) couplée aux un ou plusieurs montants de support (350) et formant une zone de support pour les un ou plusieurs ensembles de combustible, le procédé comprenant en outre la mise en circulation de l'écoulement de liquide de refroidissement principal entre la plaque de support inférieure et la surface inférieure du réflecteur à travers la plaque de coeur inférieure (355) supportée sur les un ou plusieurs montants de support (350, 340) entre les montants, et les un ou plusieurs ensembles de combustible, et jusqu'au coeur (20, 220, 320, 420).

14. Procédé selon la revendication 11, dans lequel les un ou plusieurs montants de support (350, 440) s'étendent à partir d'une surface interne arrondie de la cuve de réacteur à travers la partie inférieure de la cuve de réacteur et vers le coeur (20, 220, 320, 420).
